# EUROPEAN PATENT APPLICATION

(11) **EP 2 908 278 A1**
(43) Date of publication of application: **19.08.2015**
(21) Application number: 15151863.6
(22) Date of filing: 20.01.2015
(51) Int. Cl.: G06Q 10/10

(54) **Scoring engine**

(30) Priority: 20.01.2014 EP 14151831
(71) Applicant: S Three Management Services Limited, London W1W 5PN (GB)
(72) Inventor: Cook, Matthew, London KT1 2UA (GB); Baillie, Robert, London NW10 2RN (GB); Steer, James, London SW20 9AT (GB)
(74) Representative: Robinson, Simon John

(57) **Abstract**

A scoring engine processor (1) for processing employment role placeability request to generate an output which ranks by way of respect scores, candidates' placeability for a role, the processor comprising a data processor and a user interface (10), a database of candidates' data (5), a searching module (3) to identify those candidates which match user input search criteria and a scoring module to generate a score for candidates located by the searching module, wherein the module operative to apply stored attributes of each such candidate to scoring criteria, and wherein the scoring criteria include employment role applications previously made by each candidate, an indication of whether the candidate was invited to interview, an indication of whether the candidate was offered the role, an indication of role similarity to roles in which the candidate has expressed an interest and the distance of the candidate's current address to that of the role in question.

## Description

### Technical Field

The present invention relates to scoring engines and to related methods to preferably identify at speed a most placeable candidate at the time an agent is attempting to search for one.

### Background

A problem faced by recruitment companies is finding the most placeable candidate (ie the candidate most likely to be offered and accept an offer for employment) in a meaningful and cost-effective manner. A typical approach to solving the issue is to use simple keyword searching, including automated matching of candidates to job descriptions based on the content of the candidate CV or resume and the text of the job description. However this can lead to the return of "false positives" - eg a consultant searching for candidates programming in "Java" would also return candidates who lived in Java, Indonesia.

A more sophisticated approach is to return CVs based on semantic analysis (or "natural language searching"), using the context of keywords rather than simply the keywords themselves (hence returning "Java developer" but not "Java, Indonesia" or "Java Coffee".

However while both of the above methods return candidates whose CV is (theoretically) a "good match", they do not take into account other factors that might influence a candidates "placeability" - for example current/recent recruitment activity, proximity to the job opportunity, the depth and breadth of experience with respect to the skills required to perform the role and behavioural characteristics such as the applicants likelihood of attending interviews, the historical track record for length of service with any given employer.

A large recruitment company is likely to have a significant database size, typically comprising many hundreds of thousands of candidates on its database and so the problem of being able to sort through those in a time-efficient and meaningful way is non-trivial. We have realised a system which is highly performant, accurate and available. A consultant may perform over 500 searches per month and there is an urgency to get to the most suitable candidates as quickly as possible. What we have devised is novel and advantageous data processing which may be embodied as a scoring engine to return highly meaningful, accurate and useful results, and moreover which are generated in a short time; a sub-second response which could not be achieved by known systems in a similar time frame. Our invention preferably enables the large data set to be processed quickly, but in a way which provides the most useful results to be output.

### Summary

According to a first aspect of the invention there is provided a scoring engine processor for processing employment role placeability request to generate an output which ranks by way of respect scores, candidates' placeability for a role, the processor comprising a data processor and a user interface, a database of candidates' data, a searching module to identify those candidates which match user input search criteria and a scoring module to generate a score for candidates located by the searching module, wherein the module operative to apply stored attributes of each such candidate to scoring criteria, and wherein the scoring criteria include employment role applications previously made by each candidate, an indication of whether the candidate was invited to interview, an indication of whether the candidate was offered the role, an indication of role similarity to roles in which the candidate has expressed an interest and the distance of the candidate's current address to that of the role in question.

The invention may be implemented by a network of databases and data processors. In one embodiment of the invention, there is provided a computer system arranged to provide a highly accurate indication of a measure of placeability of a candidate for a role. This can be seen to be achieved by way of processing various parameters to calculate the measure of placeability. We have determined not only which parameters are meaningful in determining placeability, but also have determined how those parameters are processed to provide the most meaningful result. In particular, a set of search results delivered with sub-second performance, determined through simultaneously querying a variety of data sources.

According to a second aspect of the invention there is provided a method of operation of a computer system for determining candidates' placeability for a role, the method comprising conducting a search of candidates' details to determine matches between input search criteria and stored candidates' details, and in respect of the candidates identified, applying scoring criteria to the candidates' stored data which criteria includes role applications previously made by each candidate, an indication of whether the candidate was invited to interview, an indication of whether the candidate was offered the role, an indication of similarity to the role in question as compared to roles in which each candidate has expressed an interest, and the distance between an address of each candidate and the location of the role in question, and to thereby generate a score which is indicative of the placeability of the candidate, and to output a ranking of the candidates according to placeability.

The invention may be implementable by way of a software product.

The above or other aspects of the invention may include any individual feature or combination of features disclosed in the detailed description below and the accompanying drawings.

The scoring engine may comprise any feature described in the description and/or shown in the drawings.

### Brief Description of the Drawings

Various embodiments of the invention will now be described, by way of example only, with reference to the following drawings in which:
**Figure 1** shows a computer system;
**Figure 2** is a schematic representation of various components of the computer system of Figure 1, arranged to show date processed and the way in which data is processed;
**Figure 3** is a schematic representation of an implementation of a searching module of the computer system;
**Figure 4** is a schematic representation of an implementation of a filtering module;
**Figure 5** is a schematic representation of a scoring module;
**Figure 6** shows an example of a list of ranked candidates output by the computer system;
**Figure 7** shows a master and slave server architecture;
**Figure 8** is a schematic representation of transforming data into a predefined structure; and
**Figure 9** is a schematic representation of an overview of the scoring engine processing phases.

### Detailed Description

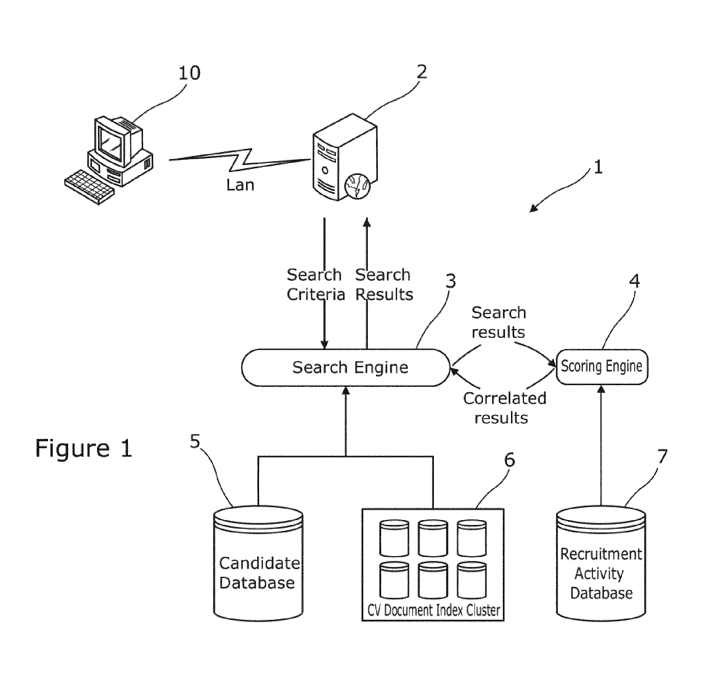

With reference to Figure 1 there is shown in overview a scoring engine system 1 which comprises a server 2, a searching (or matching) module 3, a scoring module 4. The system further comprises a candidate database 5 and a CV document index cluster (database) 6, which are arranged to be interrogated by the searching module 3. The system 1 further comprises a recruitment activity database 7 which is arranged to be interrogated/queried by the scoring module 4. The scoring module 4 arranged to have access to results produced by the searching module 3. As will be described in detail below, the computer system 1 is arranged to rapidly generate an output which is indicative of candidates ranked in terms of placeability for a job role, and moreover providing a highly accurate measure of placeability.

It will be appreciated that the modules and databases may be provided as separate physical entities interconnected by way of a network or may be provided as a single physical processing entity. The modules are realised by way of a data processor executing a series of machine-readable instructions.

The system 1 is arranged to search through potential candidate details stored within the system. Candidates are entered in a data acquisition or capture stage onto the system either by way of the candidates having applied to an advert posted on an online job board, by sending an email with their CV or resume, or via a portal or website. Alternatively, each candidate's details can be manually added to the system by a consultant. In each instance, each candidate's profile information (name, contact details, geographic information) is derived (for example using a parsing engine) and saved into the candidate database 5, and a copy of their CV as well as profile information is saved into the CV Index database 6.

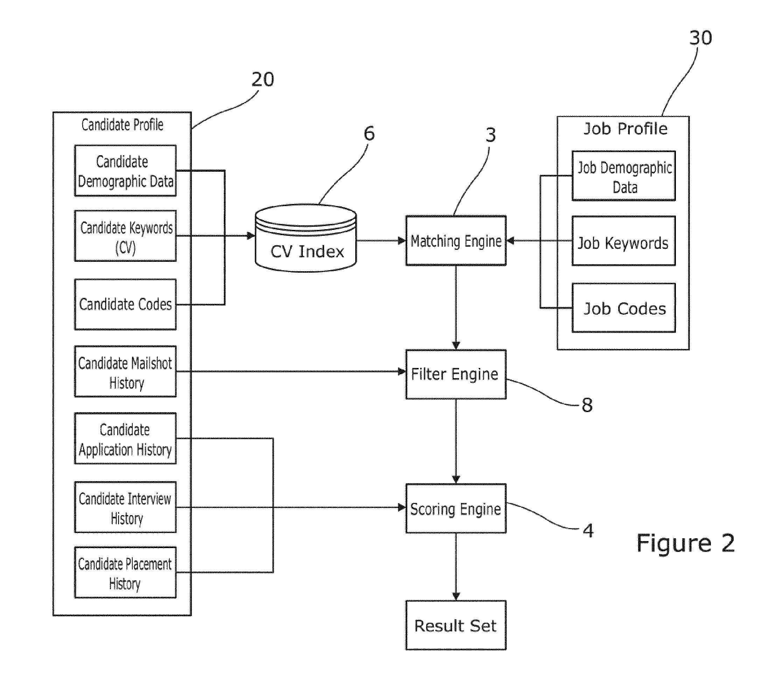

Reference is now made to Figure 2 which shows various components and modules of the system 1, and the data and criteria which the system acts on. In an initial stage of using the system, a user enters by way of user interface provided by a terminal 10 details relating to the context of the available role. Those context details may include skills required, relevant industry or sector, type of role, as well as desired candidate attributes such as current availability, salary, length of experience, importance of geographical proximity to the client. In this regard a client is the company or individual who is offering the role and for whom the search is conducted to identify the most placeable candidate. The user interface may also allow the user to select the type of search required if a suite of search types are offered. This process of the user inputting desired candidate criteria may be facilitated by the terminal 10, which is connected to the server 2 by way of a local area network (LAN) presenting search criteria input screens (derived from data stored in the server 2). The server 2 criteria input screens may prompt the user, by presenting separate screens, or data entry presentations comprising data entry fields, in respect of each of the role characteristics, candidate attributes, keywords to be searched, and codes.

As will be described below, the server 2 causes the execution of a three phase process comprising a matching phase, a filtering phase and a scoring phase, each performed by respective module. Once the user has entered the search criteria, the server 2 causes the searching module 3 to query the candidate database 5 and the CV index database 6 on the basis of the search criteria. The module 3 compares the search criteria to data stored in the databases 5 and 6, and identifies a plurality of candidates whose stored data matches the input search criteria. It will be appreciated that a match may be returned by way of deemed equivalent elements being located in the databases and not necessarily the exact entered search criteria element. It will also be appreciated that the module may be configurable to allow for located stored data which is not exact, but deemed to be sufficiently similar, to constitute a match, and therefore included in the initial result set.

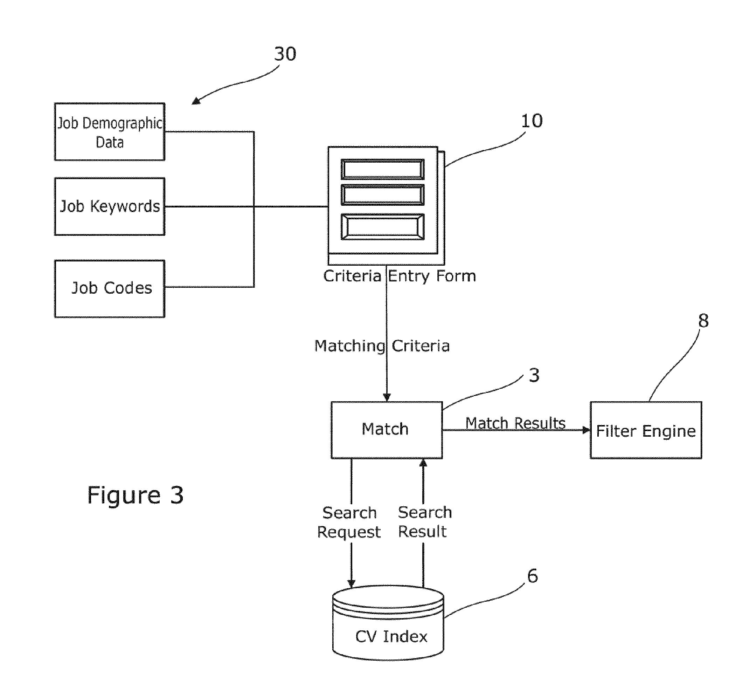

In particular, the search module 3 causes a word match search to be conducted by comparing the search criteria with details stored in the databases of the candidates' profiles and CV documents. Figure 3 schematically shows the process of identifying matching candidates using the search criteria.

As can be seen from Figure 2, the stored data which is searched is shown generally at 20, and the input search criteria is shown generally at 30.

The (initial) result set generated by the search module, which includes indexes or identifiers of candidates' details matched by the search module 3, is then acted on by the filter module 8. The filter module 8 is operative to look at the mailshot history criteria so as to remove from the search results candidates who are ineligible to receive an email (or indeed any other specified form of approach) in relation to the role (for example due to marketing or data protection status, or because that or those candidates had received another similar email within a (predetermined) time period.

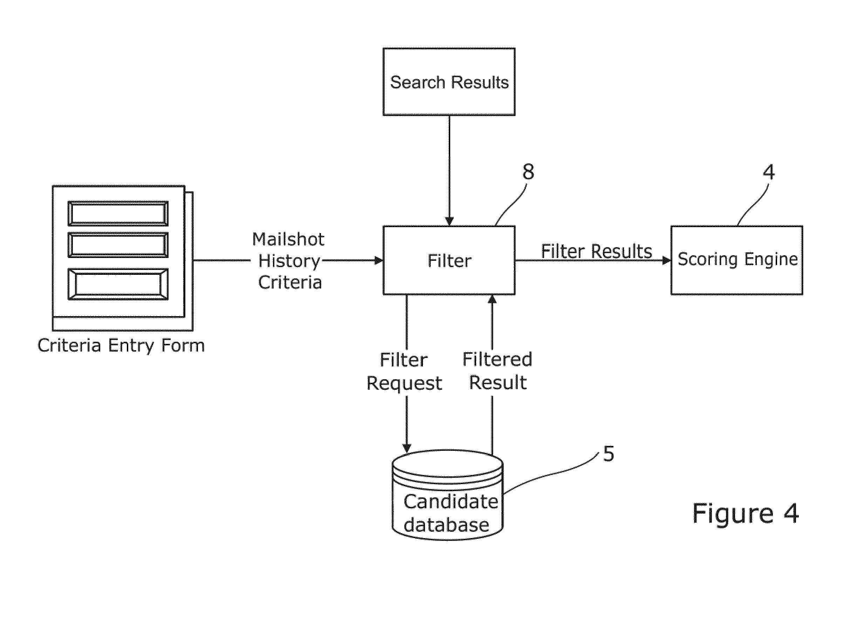

The filter module 8 therefore serves to filter out candidates who, whilst matching the search criteria, are ineligible to be contacted about the position. Reference in this regard is made to Figure 4 which shows how mailshot history criteria is applied by the filter module 8 to the initial result set, and whereby the module is configured to remove (from further consideration) those matched candidates to whom the mailshot history criteria applies, and to remove those from the results. The remaining (filtered) results are then processed by the scoring module 4.

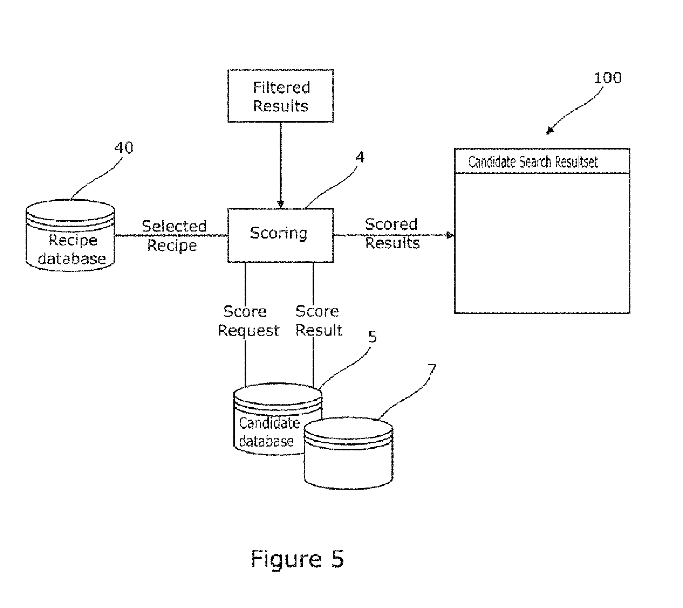

Reference is made to Figure 5 which shows a schematic of the scoring module which attributes a score to each candidate. The scoring module 4 serves to apply a selected recipe, namely a way of determining a score for each candidate returned from the filtering stage. As mentioned above, a user is able to select a required way of determining the score for each candidate (from a suite of recipe options) at the time of instigating the search by way of suitable entry made at the user interface. For each candidate (resulting from the operation of the filter module) the scoring module is operative to determine a placeability score based on a combination of the following factors:
keyword score relative to other candidates in the data returned data set; recency of job applications;
relevance of recent job applications (increased score for applying to similar jobs, decreased score for applying to a variety of jobs with different skill sets) distance from job;
suitability based on previous recruitment activity (increased score if the candidate has previously interviewed & been placed, increased score for previous interview activity, reduced score for extensive previous interview activity with no subsequent placement).

In calculating the overall score for a candidate, each aspect is assigned a respective weight or sub-score which influences the overall total score for a candidate.

It will be appreciated that for different recipes one or some of the above parameter filters may be omitted and/or the same parameter may be given a different weighting (used to determine the overall score to a greater or lesser extent).

In operation, the scoring module 4 determines the values of the above parameter value's sub-score for each candidate by consulting each of the candidate database 5 and the recruitment history database 7. In determining each parameter, the module 4 calculates associated value, and calculates an overall score for each candidate by combining the values.

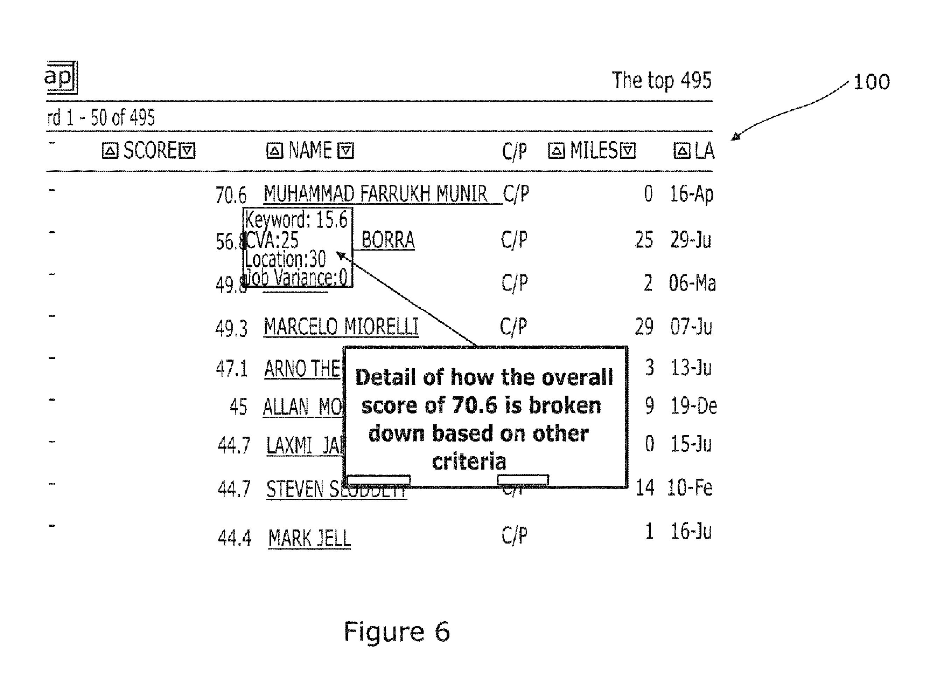

Once such processing has been conducted, the module outputs a ranked list 100 of candidates (in descending score order). An example of such an output is shown in Figure 6 which indicates at the top of the list the most placeable candidate as determined from the initial cohort of candidates which were not excluded from be contacted and which matched the keyword search criteria.

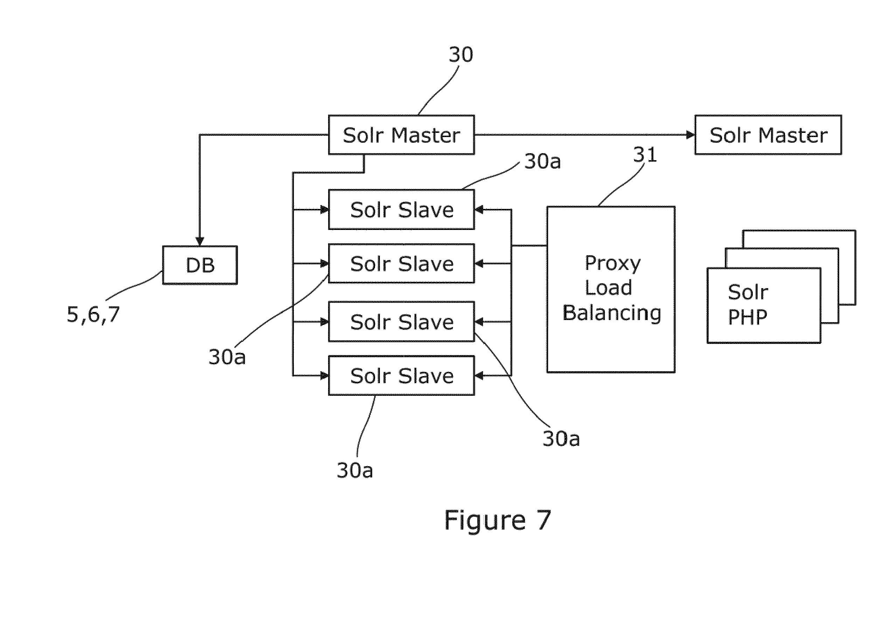

To ensure high availability and consistent performance of the core element of the computer system, the database index of CV documents is replicated across multiple physical servers with a single "master" and multiple "slaves". Requests from the database are routed to these different servers depending on prevailing demand. If there is an issue with one of the "slaves", it is taken out of production and cloned from the "master". If the "master" fails, it is replaced by one of the "slaves" and is then recreated as a "slave" as a clone of the new "master". Figure 7 shows an example of a logical architecture of a master server 30 and multiple slave servers 30a. The master server is provided intermediate of the databases 5, 6 and 7. A load-balancing module 32 is connected to the slaves and serves to effect control of balancing the processing load between the slaves. Such architecture ensures that the requirement for availability of the resource is provided.

Preferably candidates' data is stored and available to be acted upon by the search engine. In particular, a coded CV data structure is created in which incoming CVs and any candidates with recent activity are (re-)processed to conform to a unique data structure. This data structure contains not only core information extracted from the CV (name, contact information, location) but also more detailed information derived from textual analysis of the CV (current & previous employers, key skills, dates of service and years of experience with particular skills), and (uniquely to our process) information about previous activity (applications to specific jobs, recency of application, interviews attended, placements made). Jobs and candidates are coded to the same skills structure so that "job variance" can be used as a factor - i.e. candidates applying to a variety of different types of job are scored down, while candidates applying multiple times for highly relevant jobs are scored more highly.

Candidate Data Structure
- <fields>
- <!--
   general
   -->
   <field name="key" multiValued="false" />
   <field name="id" multiValued="false" />
   <field name="name" multiValued="false" />
   <field name="cv" multiValued="false" />
   <field name="skills" multiValued="true" />
   <field name="updated_date" multiValued="false" />
   <field name="cv_last_updated" multiValued="false" />
   <field name="country" multiValued="false" />
   <field name="parsing_engine" multiValued="false" />
   <field name="brand_code" multiValued="false" />
   <field name="candidate_type" multiValued="true" />
   <field name="town" multiValued="false" />
   <field name="availability_date" multiValued="false" />
   <field name="candidate_status" multiValued="false" />
   <field name="candidate_activities" multiValued="true" />
   <field name="highlight_class" multiValued="false" />
   <field name="home_postcode" multiValued="false" />
   <field name="cv_source" multiValued="false" />
   <field name="current_job_title" multiValued="false" />
   <field name="last_known_job_title" multiValued="false" />
   <field name="job_titles" multiValued="true" />
   <field name="current_skills" multiValued="true" />
   <field name="employers" multiValued="true" />
   <field name="employers_raw" multiValued="true" />
   <field name="current_employer" multiValued="false" />
   <field name="location" multiValued="false" />
   <field name="SALARY" multiValued="false" />
   <field name="RATE" multiValued="false" />
   <field name="ENTERED_DATE" multiValued="false" />
   <field name="ENTERED_BY" multiValued="false" />
   <field name="LONGITUDE" multiValued="false" />
   <field name="LATITUDE" multiValued="false" />
   <field name="CODES" multiValued="true" />
   <field name="LISTS" multiValued="true" />
   <field name="BASE_TRAFFIC_LIGHT" multiValued="false" />
   <field name="_version_" />
   </fields>

Job In addition to the above, a job data structure is also created:
- <fields>
- <!--
   general
   -->
   <field name="key" multiValued="false" />
   <field name="id" multiValued="false" />
   <field name="job description" multiValued="false" />
   <field name="skills" multiValued="true" />
   <field name="country" multiValued="false" />
   <field name="brand_code" multiValued="false" />
   <field name="job_type" multiValued="true" />
   <field name="town" multiValued="false" />
   <field name="start_date" multiValued="false" />
   <field name="postcode" multiValued="false" />
   <field name="job_title" multiValued="false" />
   <field name="key_skills" multiValued="true" />
   <field name="employer" multiValued="false" />
   <field name="location" multiValued="false" />
   <field name="SALARY" multiValued="false" />
   <field name="RATE" multiValued="false" />
   <field name="ENTERED_DATE" multiValued="false" />
   <field name="ENTERED_BY" multiValued="false" />
   <field name="LONGITUDE" multiValued="false" />
   <field name="LATITUDE" multiValued="false" />
   <field name="CODES" multiValued="true" />
   <field name="_version_" />
   </fields>

A skills library used to code Candidates and Jobs in the above data structures comprises Ontologies reflecting real-world paradigms such as Industry Sectors or professional disciplines such as Engineering. Within each Ontology, there exists Taxonomies reflecting the expertise associated with the Industry Sector or Discipline and finally within the Taxonomy, individual skills are listed along with their known synonyms. We use these skills to uniquely code each CV/Resume and Job Vacancy to allow us to deploy the algorithms we have programmed and designed to deliver a set of search results with sub-second response times.

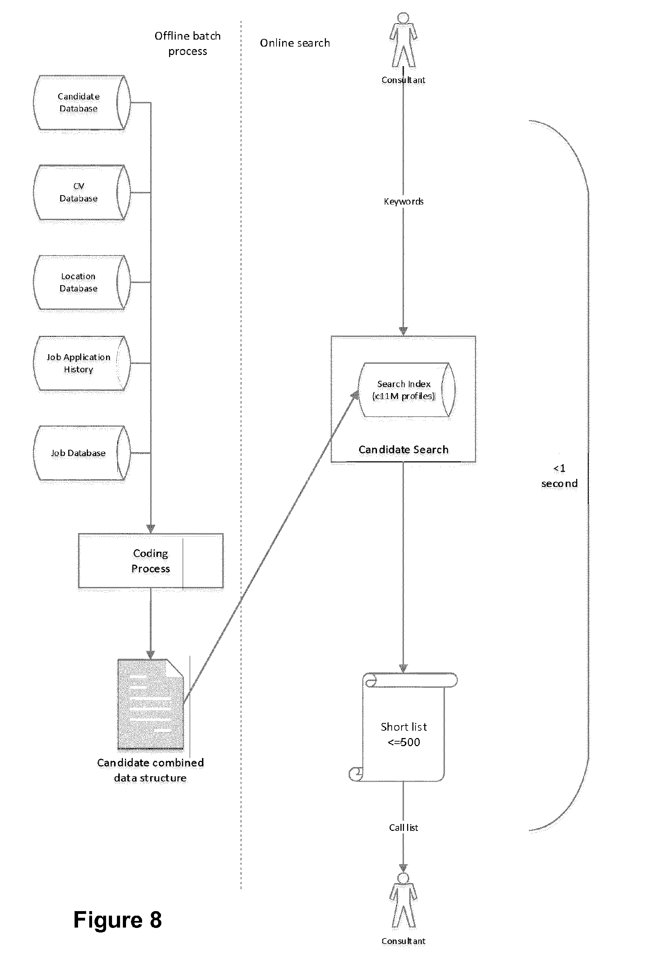

The Skill Library can conveniently continually be updated with new skills as and when they are identified using the results to forensically dissect a CV/Resume programmatically to deliver a unique set of search results detailing not only factual information, such as Job Titles, both Current and Past, CV Last Updated, Postal Radius, Home Country, Employment Type (Permanent or Contract), Work Experience in Months and Years, Management Experience in Months and Years, Languages spoken, Universities attended but the search also allows us to decipher a particular skill experience gained in multiple jobs over a time period e.g. the search will aggregate time spent on a particular skill even if there is a break in the timeline for the skill being used in a job. As can be seen from reference to Figure 8 which demonstrates the process of using data from each of the Candidate Database, the CV database, the Location database, the Job Application History and Sub Database, to be encoded into the data structure, and made available in the Search Index for keyword searching.

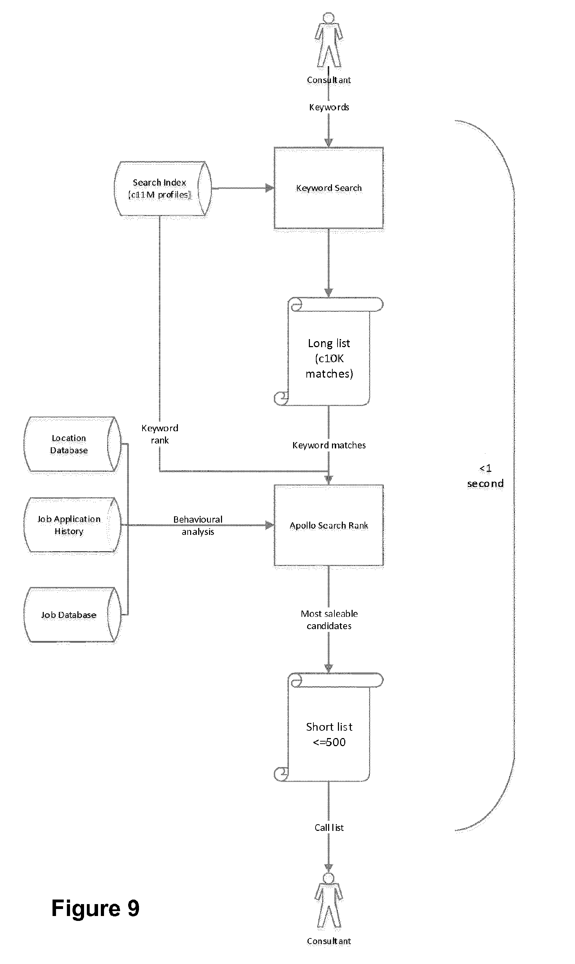

A set of search results, are delivered with sub-second performance, determined through the use of multiple data processing steps simultaneously querying a variety of data sources specifically coded to reveal context to the search results in a novel manner. The context is arrived at by utilising data processing sequences to query certain characteristics such as; the number of, the frequency of and the relevancy of previous job applications combined with transactional characteristics detailing the applicants previous historical success or otherwise post application attaining interviews and placements, in addition, suitability is further programmatically determined using longitude and latitude to determine the distance between place of residence and place of work. Data sources specifically coded are the result of a unique data architecture developed to enhance CV/Resume search results beyond a normal keyword match utilising a taxonomy of attributes specifically developed to extract key information from a CV/Resume such as Current Employer, Previous Employer, Current Job Title, Previous Job Title, Years of Experience, Years of Management Experience, Languages Spoken, Education and Skills, which is then matched to jobs in a novel manner using attributes associated with the job such as Job Title, Skills Required, Location, Industry Sector, Length of Experience, Educational Requirements. Reference is made to Figure 9 in which the multi-phase processing is demonstrated. As can be seen, keywords entered by an agent are applied to the Search Index. This produces a (long) matches result list, thus forming a first phase. In a further phase the scoring criteria is applied to the long list and thereby generating a shorter list, with associated rankings and scores. This shorter list can be easily and meaningfully reviewed by the agent. Advantageously, both of the above phases are performed in a second or less, and so the meaningful results are quickly available.

From the foregoing description it can be seen that a fast and high-quality output computer system is provided. Efficient deployment of computational resources is advantageously assigned which provides a significant capacity to generate highly meaningful results in a minimum time. Hitherto, it had not been realized how one could provide a truly meaningful indication of placeability, however, we have realized how it is possible to generate a tangible score for a quality which is inherently difficult to quantify in a meaningful way.

Each of the above mentioned modules may be realized as software or coding arranged to be executed by a data processor.

## Claims

1. A scoring engine processor for processing employment role placeability request to generate an output which ranks by way of respect scores, candidates' placeability for a role, the processor comprising a data processor and a user interface, a database of candidates' data, a searching module to identify those candidates which match user input search criteria and a scoring module to generate a score for candidates located by the searching module, wherein the module operative to apply stored attributes of each such candidate to scoring criteria, and wherein the scoring criteria include employment role applications previously made by each candidate, an indication of whether the candidate was invited to interview, an indication of whether the candidate was offered the role, an indication of role similarity to roles in which the candidate has expressed an interest and the distance of the candidate's current address to that of the role in question.

2. A scoring engine processor as claimed in claim 1 in which the searching module is operative to perform a word match search of stored candidate CV data and candidate's attributes.

3. A scoring engine processor as claimed in claim 2 in which the user interface arranged to allow a user to enter to determine a weight of at least one aspect used by the scoring engine.

4. A scoring engine processor as claimed in any preceding claim in which the scoring engine arranged to assign a weight to each aspect in determining a score.

5. A scoring engine processor as claimed in any preceding claim in which the placeability is a determined indication of the likelihood of a candidate being offered a role and accepting the role.

6. A scoring engine processor as claimed in any preceding claim which comprises a recruitment activity database comprising details of candidates' recruitment activities and the scoring engine arranged to query the said database.

7. A scoring engine processor as claimed in any preceding claim which comprises a filter module operative to remove candidates as potential candidates based on the predetermined criteria that are ineligible to be contacted about the role.

8. A scoring engine processor as claimed in any preceding claim in which the user interface is configured to allow a user to input the following criteria: relevant skill/industry/sector; location; type of role; keywords; candidate availability; length of candidate experience; importance of geographical proximity of candidate to role location.

9. A scoring engine processor as claimed in any preceding claim in which a plurality of server units arranged to be capable of processing multiple simultaneous search requests being conducted wherein one of the server units is designated as a master server unit and other server units are designated as slave server units.

10. A scoring engine processor as claimed in any preceding claim which implements a sequence of three phases, namely, a searching phase, a filtering phase and a scoring phase.

11. A scoring engine processor as claimed in claim 10 in which the phases are performed in the following order: searching phase, filtering phase and scoring phase.

12. A scoring engine processor as claimed in any preceding claim which is operative to perform a first phase comprising a search, preferably using keywords, and then perform a further phase which comprises the scoring module applying the scoring criteria to the search results so as to generate a lesser number of results, forming a sub-set of the initial search results.

13. A method of operation of a scoring engine processor for determining candidates' placeability for a role, the method comprising conducting a search of candidates' details to determine matches between input search criteria and stored candidates' details, and in respect of the candidates identified, applying scoring criteria to the candidates' stored data which criteria includes role applications previously made by each candidate, an indication of whether the candidate was invited to interview, an indication of whether the candidate was offered the role, an indication of similarity to the role in question as compared to roles in which each candidate has expressed an interest, and the distance between an address of each candidate and the location of the role in question, and to thereby generate a score which is indicative of the placeability of the candidate, and to output a ranking of the candidates according to placeability.
